# EUROPEAN PATENT APPLICATION

(11) **EP 3 244 105 A1**
(43) Date of publication of application: **15.11.2017**
(21) Application number: 17169969.7
(22) Date of filing: 08.05.2017
(51) Int. Cl.: F16K 1/36, F24D 19/10, F16K 31/00, F16K 39/02, F16K 47/00

(54) **HYDRAULIC CONTROL VALVE WITH A THERMOSTATIC CONTROL, IN PARTICULAR FOR RADIATORS**

(30) Priority: 09.05.2016 IT UA20163281
(71) Applicant: Caleffi S.p.A., 28010 Fontaneto d'Agogna, Novara (IT)
(72) Inventor: CALEFFI, Marco, 28010 Fontaneto d'Agogna (IT)
(74) Representative: Siniscalco, Fabio

(57) **Abstract**

A hydraulic valve (10) for adjusting the flow of fluid provides a valve body (11) in which a shutter (19) operates that interacts with an inner valve seat (20) to intercept the fluid along a passage (26) so as to adjust the flow thereof; a member (C) that is sensitive to the temperature outside the valve drives the shutter (19) according to said temperature through a rod (18) connected to the shutter (19); for operation of the valve without sound noises a housing (24) is provided that slidably receives the shutter (19) in a sealing manner such as to form a chamber (25) between the shutter (19) and the housing (24), and a conduit (27) is provided that connects the passage (26) to the chamber (25) such that the pressure of the fluid acts on both the faces (A, B) of the shutter (19).

## Description

### BACKGROUND OF THE INVENTION

This invention relates to a hydraulic control valve with a thermostatic control, in particular for radiators of heating plants.

### PRIOR ART

Hydraulic control valves with thermostatic controls are known that are typically used on radiators of heating plants to intercept fluid.

The thermostatic control provides an element that is sensitive to environmental temperature consisting of a bellows containing a specific thermostatic liquid.

With an increase in environmental temperature the liquid increases in volume and causes an axial expansion of the bellows whereas with a decrease in environmental temperature the liquid decreases in volume and reduces through the effect of a contrasting spring.

The axial movements of the sensitive element are transmitted by a connecting rod to a shutter that, by moving from and to a respective seal seat, adjusts the flow of fluid in the radiator according to the temperature of the environment in which the radiator is located.

One problem of these thermostatic valves is noise in certain operating conditions. In particular, when the shutter is driven to the closed position, in the positions near the closed position maddening high frequency noises are created.

### OBJECT OF THE INVENTION

The object of this invention is to solve the aforesaid noise problem.

### SHORT DESCRIPTION OF THE INVENTION

This object is achieved by a hydraulic control valve with a thermostatic control according to claim 1.

### SHORT DESCRIPTION OF THE DRAWINGS

In order to better understand the invention, a description is given below of a nonlimiting exemplary embodiment thereof, illustrated in the attached drawings, in which:
fig. 1 is an axial section view of a hydraulic control valve with a thermostatic control according to the invention in an open position;
fig. 2 shows the valve of fig.1 in a closed position;
fig. 3 shows in an exploded perspective view the aforesaid valve according to the invention.

### DETAILED DESCRIPTION OF THE INVENTION

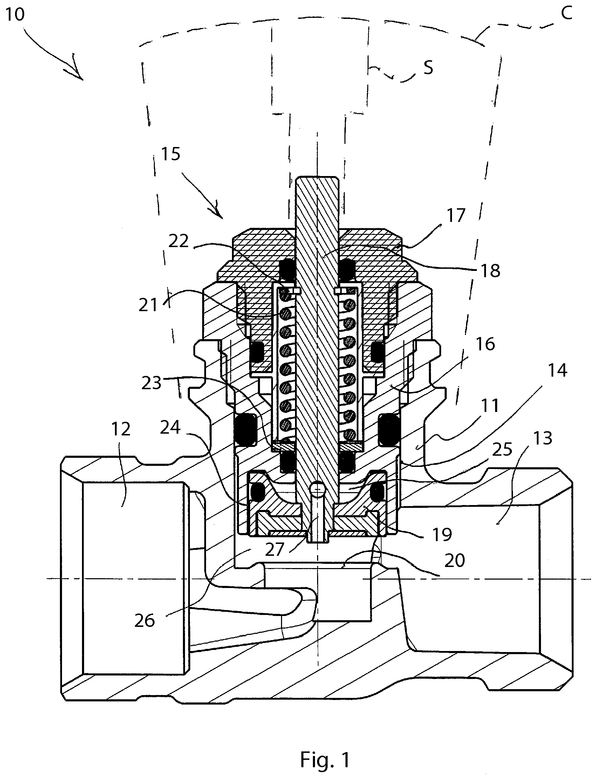

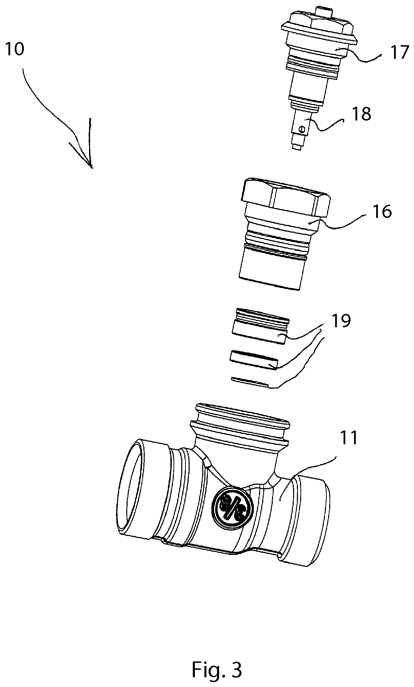

The control valve of figs 1-3, indicated overall with 10, provides a hollow valve body 11 in which a fluid inlet 12 and a fluid outlet 13 are obtained, and in which a housing 14 is obtained that receives a shutter device 15.

The shutter device 15 has a bush 16 with a polygonal head that is screwed in a sealing manner into the body 11 and a cap 17, which also has a polygonal head, that is screwed in a sealing manner axially into the bush 16. In the bush 16 and in the cap 17 a connecting rod 18 is slidably received in a sealing manner. To one end of the rod 18 a cylindrical shutter 19 is fixed that interacts with a cylindrical valve seat 20 obtained in the valve body to adjust the flow of fluid between the inlet 12 and outlet 13 of the valve 10. The other end of the rod 18 protrudes from the cap 17. Inside the bush 16 and the cap 17 a spring 21 is received that acts on a ring 22 anchored to the rod 18 and reacts on a bottom 23 inside the bush 16 so as to push the shutter 19 elastically to the position of maximum opening against the bush 16.

The connecting rod 18 is driven by a thermostatic control of known type, indicated in a dashed line in Fig.1 with C, which is connected to the shutter device 15. The thermostatic control C has a temperature sensitive element, indicated with S, which causes axial movement of the connecting rod 18 and thus of the shutter 19 between an open position and a closed position of the shutter 19.

The shutter 19 is slidably received in a sealing manner in a cylindrical housing 24 of the bush 16. The diameter of the cylindrical housing 24 of the bush 16 is greater than the diameter of the cylindrical valve seat 20 against which the shutter 19 abuts.

In the cylindrical housing 24 between the shutter 19 and the bush 16 a chamber 25 is defined that is in communication with a passage 26 obtained in the valve body 11 between the inlet 12 and the outlet 13 at the valve seat 20. Communication between the chamber 25 and the passage 26 is obtained by a conduit 27 formed in the connecting rod 18.

The operation of the valve 10 is as follows.

It is assumed in this embodiment that the valve 10 is fitted to a radiator of a heating plant for heating an environment; the valve 10 adjusts the flow of heating fluid in the radiator.

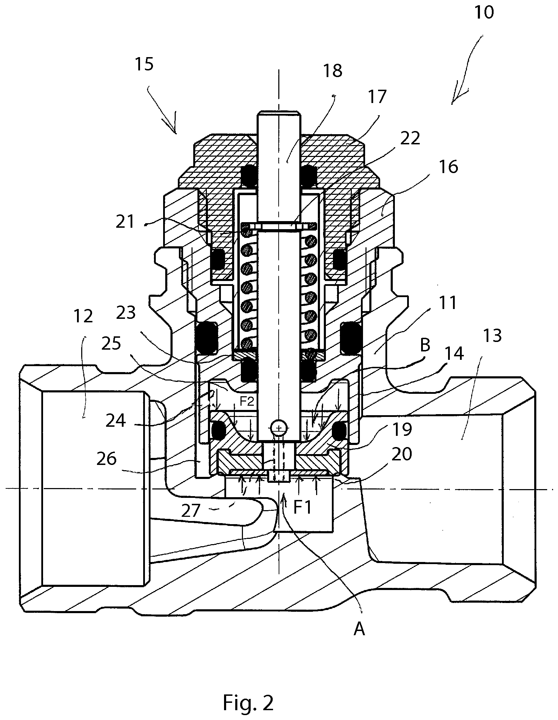

As the environmental temperature increases, the thermostatic control C moves the connecting rod 18 axially and thus the shutter 19 downwards, contrasting the action of the spring 21, from the open position of fig. 1 to the closed position of fig. 2. In this manner, the shutter 19 progressively closes the passage 26 so as to decrease the flow of heating fluid from the inlet 12 to the outlet 13 of the valve 10 and consequently decrease the flow of fluid inside the radiator.

On the other hand, as the environmental temperature decreases, the thermostatic control C moves the connecting rod 18 axially and thus the shutter 19 upwards, through the action of the spring 21, from the closed position of fig. 2 to the open position of fig. 1. In this manner, the shutter 19 progressively opens the passage 26 so as to increase the flow of heating fluid from the inlet 12 to the outlet 13 of the valve 10 and to increase accordingly the flow of fluid inside the radiator.

The movement of the shutter 19 is positively influenced by the forces that the fluid exerts on both faces of the shutter 19, i.e. the face towards the passage 26, indicated by A in fig. 2, and the face towards the chamber 25, indicated in fig. 2 with B. The pressure acting on the faces of the shutter 19 is the same owing to the conduit 27 of the connecting rod 18 that places the passage 26 and the chamber 25 in communication.

During the movement of the shutter 19 between the open position and the closed position, the opposing hydraulic forces F1 and F2, indicated in fig. 2, acting on the two faces A, B of the shutter 19, have the same value.

Upon closure of the shutter 19, the force F2 is greater than the force F1 because the diameter of the housing 25 is greater than the diameter of the valve seat 20.

This balancing/unbalancing of hydraulic forces acting on the shutter 19 is particularly advantageous.

Upon closing of the shutter 19 the force F2, which is greater than the force F1, pushes the shutter 19 firmness to the closed position, avoiding the maddening high frequency noises mentioned in the introduction.

During the movement between the open position and the closed position, the shutter 19 is not influenced by the forces F1, F2 as the forces are equal, indeed this equality makes the movement of the shutter insensitive to possible pressure jumps or differential in the valve 10. Further, the presence of hydraulic forces on both faces of the shutter 19 enables shutter 19 driving forces of reduced entity to be used.

Another advantage of the disclosed and illustrated valve configuration is the possibility of using the valve both in the flow direction seen from the inlet 12 to the outlet 13 and in the opposite direction.

Variations on and additions to what has been disclosed and illustrated above can be provided.

The chamber and the valve seat can have the same section, nevertheless obtaining the advantage of eliminating sound noises.

The conduit that connects the chamber to the fluid passage in the valve body can be obtained in the shutter instead of in the control rod.

Instead of the thermostatic control for driving the shutter, an electrothermal control or a linear motor actuator can be applied to the valve.

The configuration of the valve body, just like the configuration and the number of the components disclosed and illustrated, can vary.

Instead of the gasket illustrated for sealing the shutter in sliding along the chamber, a diaphragm can be used.

## Claims

1. Hydraulic valve (10) for adjusting the flow of fluid, comprising:
- a valve body (11), in which at least one inlet (12) and at least one outlet (13) are obtained, and a passage (26) that connects the inlet (12) to the outlet (13);
- a shutter (19) that interacts with an inner valve seat (20) of the valve body (11) to intercept the fluid along the passage (26) so as to adjust the flow thereof, in which the shutter comprises a first face (A) arranged at the valve seat (20) and a second opposite face (B) arranged on the opposite side;
- a member (C) that is sensitive to the temperature outside the valve to drive the shutter (19) according to said temperature through a rod (18) connected to the shutter (19);
**characterised in that**:
- it comprises a housing (24) that slidably receives the shutter (19) in a sealing manner such as to form a chamber (25) between the shutter (19) and the housing (24);
- it provides a conduit (27) that connects the passage (26) to the chamber (25), such that the pressure of the fluid acts on both the faces (A, B) of the shutter (19).

2. Hydraulic valve according to claim 1, wherein the section of the chamber (25) is greater than the section of the valve seat (20).

3. Hydraulic valve according to claim 2, wherein the valve seat (20) and the chamber (25) have a circular section and the diameter of the chamber (25) is greater than the diameter of the valve seat (20).

4. Hydraulic valve according to any preceding claim, wherein the conduit (27) is obtained in the connecting rod (18).

5. Hydraulic valve according to any one of claims 1 to 3, wherein the conduit is obtained in the shutter (19).

6. Hydraulic valve according to any preceding claim, wherein an elastic element (21) is provided that acts on the shutter (19) in the direction of the opening of the shutter (19).

7. Hydraulic valve according to any preceding claim, wherein the connecting rod (18) and the shutter (19) are received in one or more components (16, 17) of the valve that are fixed removably in a sealing manner in the valve body (11).

8. Hydraulic valve according to any preceding claim, wherein the member that is sensitive to temperature is a thermostatic control (C) with an element that is sensitive to temperature that expands or reduces according to said temperature and drives the connecting rod (18) and the shutter (19) accordingly.
